# EUROPEAN PATENT SPECIFICATION

(11) **EP 4 249 758 B1**
(45) Date of publication and mention of the grant of the patent: **16.10.2024**
(21) Application number: 22163397.7
(22) Date of filing: 21.03.2022
(51) Int. Cl.: F16C 3/02

(54) **ASSEMBLED SHAFT AND METHOD FOR MANUFACTURING AN ASSEMBLED SHAFT**
ZUSAMMENGESETZTE WELLE UND VERFAHREN ZUR HERSTELLUNG EINER ZUSAMMENGESETZTEN WELLE
ARBRE ASSEMBLÉ ET PROCÉDÉ DE FABRICATION D'UN ARBRE ASSEMBLÉ

(43) Date of publication of application: 27.09.2023
(73) Proprietor: Anton Häring KG - Werk für Präzisionstechnik, 78585 Bubsheim (DE)
(72) Inventor: Häring, Jürgen, 78585 Bubsheim (DE)
(74) Representative: Wittmann, Günther

(56) References cited:
- DE-A1- 102004 001 141
- DE-A1- 102017 122 122
- US-A- 1 291 388

## Description

### Field of the Invention

The present invention relates to an assembled shaft and particularly to a shaft-hub connection which is used in various applications. Instead of a solid shaft, a hollow shaft is used which may be installed in electric motors as the carrier shaft of the rotor package, such as in an electric motor of an electric vehicle.

A rotor shaft comprises various parts, which are characterized by different requirements. On the one hand, the requirements result from the end parts, which are usually designed as bearing points and are therefore often heat treated and ground, or finished, and on the other hand from a central part, to which the rotor pack is applied via various methods. The rotor assembly may be pressed onto a very precise, usually ground shaft. It is advantageous if this central part is hollow or comprises bores, through which a cooling medium may flow, which can cool the rotor pack during operation. The end pieces at each end of the shaft may have teeth or other form-locking elements, which are hardened or soft, which transmit or recuperate the torque generated by the rotation of the rotor pack in the stator to the gearbox or other assemblies connected to it.

The individual components of the assembled shaft are more or less stressed depending on the load scenario. In particular, the side acting directly on the gearbox is characterized by a static and dynamically acting torsional force, which acts on the shaft-hub connection of the various components of the rotor shaft.

The resulting misalignment of the individual acting elements to each other and the geometric misalignment resulting from the bearing on both sides cause bending stresses, which can also be described as rotating bending stress. These are speed-dependent in terms of the number of load reversals and load cycles and are equivalent in magnitude to the geometric misalignment and also the nominal load height at the respective load time.

The advantages of an assembled rotor shaft composed of shaft members are evident. On the one hand, the individual shaft elements of an assembled shaft may be optimized in terms of weight and load, and may be designed by the smallest possible hollow body. Thereby, a reduction in weight may be achieved. Because the individual shaft elements are smaller, a simpler, more cost-effective production process may be realized in large scale production by use of forming processes such as cold extrusion, semi-hot or hot extrusion. The material composition of the individual shaft members may be selected depending on the stress, i.e. high-quality, high-alloy material can be selected for the bearing points, but lower-quality materials may be used for the other areas having lower mechanical stress.

Further, the input weights for the heat treatment or other treatments of the shaft members are significantly lower as compared to an entire shaft, which leads to a constant quality and also to a more cost-effective utilization of the manufacturing equipment.

### Prior art

It is known to build camshafts from several hollow bodies by capacitor discharge welding. It is also known to build a turbocharger by capacitor discharge welding of a hollow shaft with a turbine wheel, which also comprises hollow cross sections.

DE 10 2014 202 929 A1 discloses a wheel bearing hub and a flange which are joined to each other in a substance-to-substance bond, for example by impulse welding.

EP 372 663 B1 discloses pressure welding of a rotationally symmetrical metallic body on a metallic shaft. Capacitor discharge welding can be used as pressure welding.

WO 2009/052885 discloses the joining of a turbine wheel and a shaft of an exhaust gas turbocharger by capacitor discharge welding.

US 1,291,388 discloses that in assembling a shaft is heated, sleeve upon the stub, and swaged into the grooves to provide integral groove engaging keys. This swaging is preferably done by placing in a hydraulic press having three grips which force the material of the tube to the bottoms of the key-ways, providing, in effect, integral keys, the structure illustrated having three uniformly spaced grooves and coacting keys. In cooling, the tubular shaft contracts upon the shaft stub, making a very secure connection. To further reinforce and secure the joint the end of the shaft is welded at upon a beveled shoulder. This is preferably, an acetylene or an electric arc weld securing a fusing weld of the parts entirely around the joint.

DE 10 2004 001 141 A1 discloses a method of manufacturing a plurality of shaft journals for torque introduction comprising the steps of machining a rod-shaped component which forms a plurality of shaft journals, separating the shaft journals from one another, and a method for manufacturing a shaft with two shaft journals for torque introduction and an intermediate shaft section, comprising the steps of machining a rod-shaped component which forms both shaft journals, separating the shaft journals from each other and connecting the two shaft journals with an intermediate shaft element to form the finished shaft.

DE 10 2017 122 122 A1 relates to a method for manufacturing a rotor shaft comprising the steps of: providing a journal comprising a particularly cylindrical shaft insert, producing a hollow rotor shaft body which is open at least at a first end for receiving the journal and is designed as a rotary body, wherein there is an interference between a shaft insert outer surface and a rotor shaft body inner surface, and inserting the shaft insert into the rotor shaft body for fastening the journal to the rotor shaft body and for completing the rotor shaft.

The prior art does not offer a technique for manufacturing an assembled shaft that fulfills the requirements for an electric motor vehicle.

### Summary of the invention

It is an object of the present invention to provide an assembled shaft and a method of manufacturing an assembled shaft, wherein the assembled shaft can fulfill the requirements of an electric motor, particularly an electric motor in an electric vehicle.

The object of the present invention is achieved by a method according to claim 1 and an assembled shaft according to claim 11.

The present invention discloses a method of manufacturing an assembled shaft comprising the step of expanding the inner diameter of at least a joining portion of a first shaft element and/or a step of reducing the outer diameter of at least a joining portion of a second shaft element. The method comprises the step of positioning the joining portion of the first shaft element around the joining portion of the second shaft element. The method further comprises the step of welding the first shaft element and the second shaft element by forcing a current flow through the first shaft element and the second shaft element.

The method comprises the step of reducing the inner diameter of at least the joining portion of the first shaft element and/or the step of increasing the outer diameter of at least the joining portion of the second shaft element.

Thereby, the first shaft element and the second shaft element are pressed and welded. It is to be understood, that an assembled shaft may comprise more than two shaft elements that are joined to each other to form the assembled shaft.

The method may comprise the step of arranging a flexible element between the joining portion of the first shaft element and the joining portion of the second shaft element. The flexible element may act as a centering element that centers the first shaft element with respect to the second shaft element before the step of welding the first shaft element and the second shaft element. The method may further comprise the step of forming a circumferential recess in the second shaft element and the step of positioning the flexible element in the circumferential recess. The flexible element may protrude from the circumferential recess.

The elastic element may be made of plastics, a peek polymer, polyethylene, rubber like material, non-ferreous metal, low-allow metals or the like.

The inventors of the present invention have recognized that by the pressing and welding technology described herein high load requirements at low cost may be met. The welded joint of the first and second shaft member, preferably made by capacitor discharge welding as a low-cost, high-quality welded joint, is overlaid by a press fit such that it is not only capable of absorbing said torsional forces of a static and dynamic nature, but also of absorbing static and dynamic alternating bending stresses as well as bending circumferential stresses via the press fit. This represents a significant cost reduction compared with the laser welding processes commonly used today, which are very cost-intensive and do not exhibit the same behavior under continuous load.

When designing a shaft-hub connection, it is crucial to offer the possibility of dimensioning an explicit solution for the load spectrum required by the application. The weld seam may be designed radially as multiple protrusions, such that even very high torsional forces >1000 Nm may act, as well as via the press fit, which can be dimensioned accordingly in the axial direction for the various bending stresses >300 Nm so that no negative effects on the shaft-hub connection result over the service life. This ensures the robustness of the overall system and the press fit can be used in a wide variety of applications.

The method further comprises the step of forming a protrusion on the first shaft element that is directed to the second shaft element. Additionally the method comprises the step of forming a protrusion on the second shaft element that is directed to the first shaft element. Then, the method comprises the step of welding the first shaft element and the second shaft element by melting the protrusion by a current flow. The protrusion generates a region of low electrical resistance in which the current flows. The protrusion melts and seals the gap between the joining portion of the first shaft element and the joining portion of the second shaft element against corrosion and generates a mechanically stable connection..

The method further comprises the step of forming the protrusion in the axial direction from the axial end face of the second shaft element toward the axial end face of the first shaft element.

The step of forming a protrusion on the first shaft element that is directed to the second shaft element and forming a protrusion on the second shaft element that is directed to the first shaft element comprises the step of forming a cone shaped protrusion. The cone shaped protrusion causes a high current density for melting the cone shaped protrusion and for quickly welding the first shaft element with the second shaft element. A plurality of protrusions may be arranged on the axial end face of the second shaft element, wherein the protrusions are positioned at a constant radius from the axis of the second shaft member. The protrusions melt during welding, such as capacitor discharge welding.

During the capacitor discharge welding process, an exact orientation of the components to be welded is important, because any deviation or eccentricity leads on the one hand to imbalance on the finished rotor shaft and on the other hand to increased machining or cutting effort. Therefore, during capacitor discharge welding, care is taken to use auxiliary devices to center the parts to be joined in the best possible way, ideally below approximately 0.1 mm. Then, the protrusions are melted such that in the very short period of capacitor discharge welding, the current discharges exactly at this point, where the lowest electrical resistance is located and contact is created between the two joining portions. When the current discharge causes a local heating of the weld protrusion, a melting of the material in the area of the protrusion within a few milliseconds is caused. In capacitor discharge welding, a permanently constant contact force acts in a superimposed manner in the axial direction of the shaft members, and thus the welded joint is formed in the shortest possible time during the melting process. This takes place without heating the parts to be welded, since the time span of the welding process is extremely short.

Outside the welding area, however, contact between the joining partners must be prevented.

A press fit requires narrow tolerances between the joining partners that are being pressed, i.e. the joining portion of the first shaft element and the joining portion of the second shaft element. The pressing is carried out forcibly via a mechanical contact. This results in a defined overlap of the joining portion of the first shaft element and the joining portion of the second shaft element joined to form the press fit. Depending on the dimensions and materials used, the press fit is designed to withstand the acting loads.

To combine both processes, the conventional, preferably axial capacitor discharge welded joint is performed first.

The joining portion of the first shaft element may be expanded such that the joining portion of the first shaft element and the joining portion of the second joining element can be pushed into each other with a minimum of radial play (less than 0.3 mm).

Expansion can be achieved by a wide variety of methods, on the one hand by the action of heat or other media, and on the other hand by mechanical, electromechanical or hydraulic action. In one embodiment, inductive heating of one of joining portion of the first shaft element results in an increase in the inner diameter of the joining portion.

Further, it is possible to reduce the effective diameter of the joining portion of the second shaft element. This may be achieved by supplying cold media, such as liquid nitrogen or by mechanical, electromechanical or hydraulic processes, which, for example, but not only by elongation in the axial direction, lead to a reduction in the diameter, which after subsequent relief relaxes to the original dimension, as long as this is within the elastic range of the material.

In both cases, capacitor discharge welding is possible on the contacting plane surfaces of the two joining portions, since at the time of welding the parts are not in contact in the radial direction. However, to properly dimension the clearance to the load requirement and not to the joining process, it is possible to additionally use an elastic element and joining aid, respectively.

The elastic element (joining aid) may be made of a material that is placed in the recess formed into one of the two joining partners (joining section of the first or second shaft element). During joining, the flexible element spaces the two joining portions apart in the axial direction from each other and thus prevents direct electric contact, and thus prevents any flow of electrical energy. During the formation of the press fit, i.e. when the two joining partners (joining portions of the first and second shaft element) are pressed together, the elastic element (joining aid) may retract into the respective recess. The recess is thus larger in volume than the volume of the elastic element. The elastic joining aid (elastic element) may be deformed in such a way that it utilizes the available volume of an annular recess. The elastic joining aid may also have the effect of additionally fine centering, depending on how rigid it is made. This ultimately means that the imbalance induced via the shaft-hub connection is significantly lower than with a traditional capacitor welded connection.

For example, if the rotor shaft (in one embodiment the first shaft element) is thermally heated, then such heat generation can radiate to the welded portion and lead to slower cooling of the welded portion and thus to less crack formation and in the best case eliminate it completely.

If such heating is carried out at the same time as the expansion, energy optimization is possible in multiple ways. For example, residual heat from hardening a shaft member may be used for expanding the second shaft member and waste heat during final cooling has a tempering function for the next batch.

If the connection between the first and second shaft member is designed such that the melted material flows into the free spaces, then an airtight connection is created which, depending on the design, seals the desired areas, such as the joining section of the first and second shaft element. This sealing function ensures that crevice corrosion, which is always a latent threat, is reduced or completely eliminated. In this respect, a significant increase in the overall service life of the press-weld bond is ensured.

The method further comprises the step of forming an essentially cylindrical opening in the end face of the first shaft element extending in the axial direction of the first shaft element, wherein the essentially cylindrical opening in the end face of the first shaft element forms the joining portion of the first shaft element. The method further comprises the step of positioning the joining portion of the second shaft element in the essentially cylindrical opening in the end face of the first shaft element.

The step of expanding the inner diameter of at least the joining portion of the first shaft element comprises the step of heating at least the joining portion of the first shaft element. Thereby, fractures forming after capacitor discharge welding can be avoided. The method further comprises the step of reducing the inner diameter of at least the joining portion of the first shaft element comprising the step of cooling the joining portion of the first shaft element. The cooling must not be necessary a cooling by a cooling media. The cooling step may be performed by any type of forced or unforced cooling.

In one embodiment the first shaft element and/or the second shaft element may be a hollow shaft. Thereby, a cooling liquid may flow through the hollow shaft cooling element positioned on the hollow shaft.

The method may further comprise the step of arranging a rotor of an electric motor on the first shaft element and/or the second shaft element. The rotor bank can be cooled, if a coolant flows through a hollow shaft.

The step of welding the first shaft element and the second shaft element by forcing a current flow through the first shaft element and the second shaft element comprises a capacitor discharge welding. During this step the first shaft element and the second shaft element are pressed against each other.

The invention further discloses an assembled shaft manufactured by the above method steps.

The invention further discloses an assembled shaft comprising a first shaft element having a joining portion having an inner diameter. A second shaft element of the assembled shaft has a joining portion having an outer diameter, wherein the joining portion of the first shaft element is arranged around the joining portion of the second shaft element by press fit. The front face of the joining portion of the second shaft element is welded to the first shaft element.

The assembled shaft may be configured as described by the method above.

A flexible element is arranged between the joining portion of the first shaft element and the joining portion of the second shaft element, as described above.

The invention also discloses an electric motor comprising the assembled shaft manufactured according the above method steps or comprising the above assembled shaft. In this embodiment, the rotor element may be arranged on the first shaft element and/or the second stop shaft element.

The invention further discloses a vehicle comprising the assembled shaft manufactured according to the above described method steps or the electric motor having the assembled shaft manufactured according to the above described method steps.

Short description of the drawings

The invention is now explained in further detail with reference to the enclosed drawings depicting non-limiting and exemplary embodiments of the present invention, wherein:
Figure 1 shows a sectional view of a joint of a first shaft member and a second shaft member;
Figure 2 shows a magnified portion of figure 1, which is of particular interest;
Figures 3a shows an assembled shaft manufactured from three shaft elements;
Figures 3b shows an assembled shaft manufactured from three shaft elements;
Figure 4 shows a portion of the second shaft element, in which recess are formed for accommodating an elastic element;
Figure 5 shows the first shaft element and the second shaft element before welding; and
Figure 6 shows the first shaft element and the second shaft element after welding and pressing the first shaft element on the second shaft element in a sectional and partially cut away view.

### Detailed description of the invention

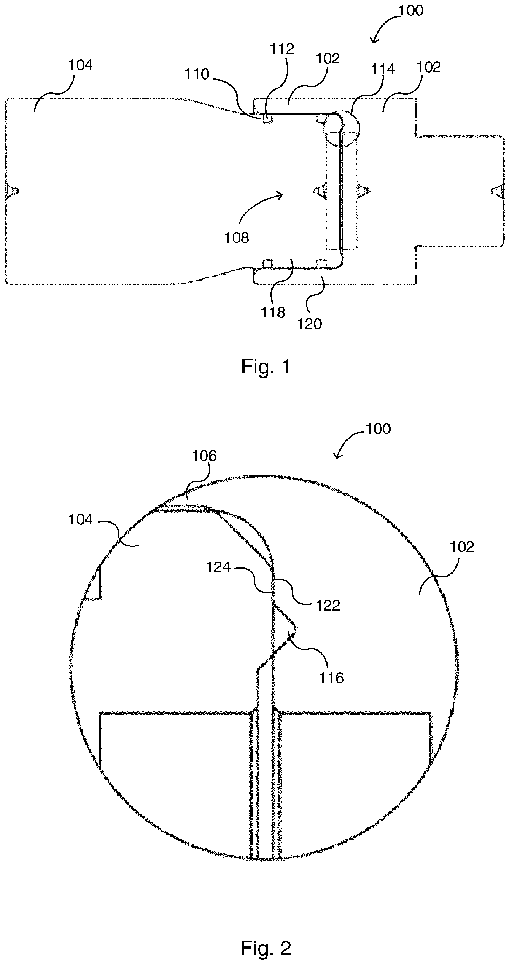

Figure 1 shows a sectional view of a portion of an assembled shaft 100 comprising a first shaft element 102 and a second shaft element 104. The first shaft element 102 and the second shaft element 104 are essentially cylindrical. A joining portion 118 of the second shaft element 104 is positioned in a cylindrical opening 108 formed in the first shaft element 102. The cylindrical opening 108 extends essentially in the axial direction. A joining portion 106 of the first shaft member 102 extends along the opening 108 in the first shaft element 102 in axial direction and fixes the joining portion 118 of the second shaft element 104 in radial and axial direction. In other words, the joining portion 120 of the first shaft element 102 and the joining portion 118 of the second shaft element 104 extend in axial direction.

Figure 2 shows portion 114 of figure 1 in a magnified view. On the second shaft element 104 a protrusion, a cone 116 or the like is formed. In figure 2 the cone 116 is schematically shown to extend into the first shaft element. This is not the case after welding the first shaft element and the second shaft element 104. Before inserting the joining portion 118 of the second shaft element 104 into the axial opening 108 and the joining portion 120 of the first shaft element, the joining portion 120 of the first shaft element is heated, such that the inner diameter of the joining portion 120 of the first shaft element 102 is increased. The second shaft element 104 is moved into the axial opening 108 until the cone 116 touches the axial end face 122 of the first shaft element 102. Thus, an axial end face 124 of the second shaft element 104 is spaced apart from the axial end face 122 of the first shaft element 102.

Thereafter, the first shaft element 102 and the second shaft element 104 are pressed towards each other in the axial direction, and the current flow is forced through the first shaft element 102 and the second shaft element 104. The current flow can be generated by capacitor discharging. The current flows through the cone 116 and melts the cone 116 such that the melted material of the cone 116 seals the end face 122 of the first shaft element 102 and the end face 124 of the second shaft element 104 and fixes the end face 122 of the first shaft element 102 to the end face 124 of the second shaft element 104. Thereafter, the temperature of the joining portion 120 of the first shaft element 102 is reduced. Since the joining portion 120 and the end face 122 of the first shaft element 102 have been heated before welding formation of cracks can be reduced significantly if not eliminated. After cooling the joining portion 120 of the first shaft element the first shaft element 102 and the second shaft element 104 are fixed by welding at their respective end faces 122 and 124 as well as by a press fit generated by a protrusion 106 extending from the end face 122 in axial direction of the first shaft element 102 against the joining portion 118 of the second shaft member 104. Capacitor discharge welding is known to the person skilled in the art and does not have to be explained in further detail herein.

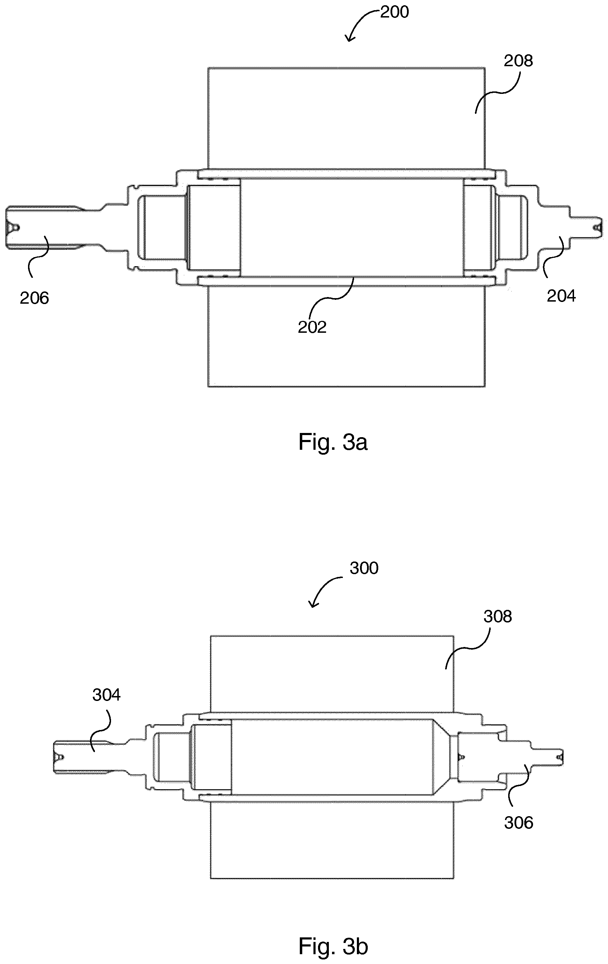

Reference is made to figure 3a showing an assembled shaft 200 having three shaft elements 202, 204 and 206. The shaft elements are fixed to each other as described herein by pressing and welding. The first shaft element 202 is a hollow shaft. The second shaft element 204 and the third shaft element 206 are partially hollow. On the first shaft element 202 the rotor 208 of an electric motor can be fixed. The second shaft element 204 and the third shaft element 206 may act as a hub.

Figure 3b shows another embodiment of an assembled shaft 300 comprising three shaft elements 302, 304 and 306. On the first shaft element 300 to a rotor 308 of an electric motor may be arranged. The first shaft element 302 is hollow. The second shaft element 304 is partially hollow. The third shaft element 306 is solid. The first shaft element 302, the second shaft element 304 and the third shaft element 306 may be fixed as described herein by pressing and welding. The second shaft element 304 and the third shaft element 306 may act as a hub. The shaft elements may be made of steel. Shaft elements that face a high load may be made of high-alloy steel, tempered steel or hardened steel, and shaft elements that face a lower load may be made of low-allow steel.

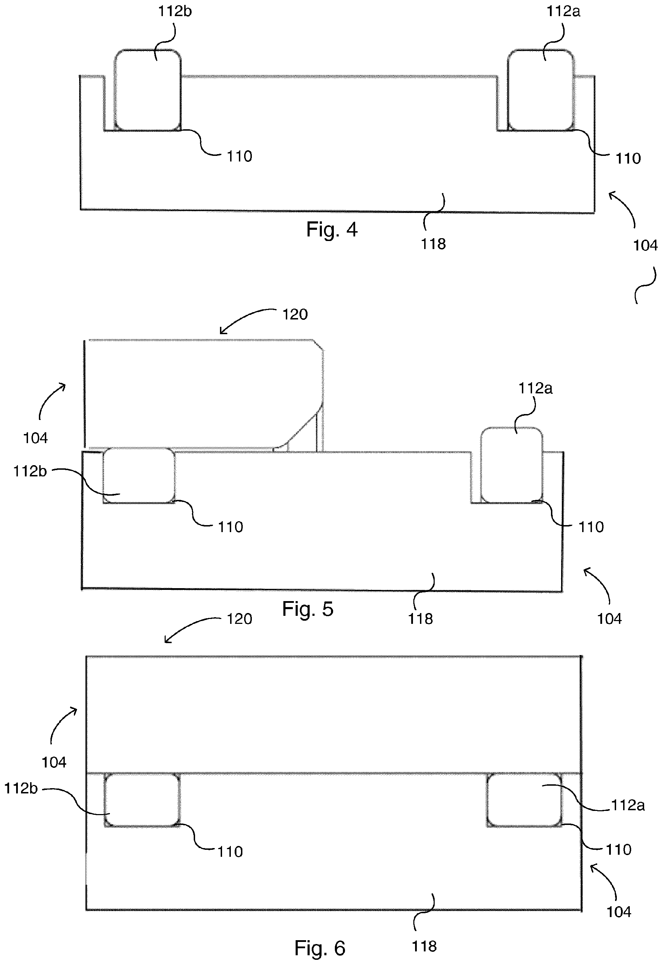

Figure 4 shows the joining portion 118 of the second shaft element 104 in a partially cut away view. In the second shaft element a circumferential recess 110 is formed. The circumferential recess 110 extends in the radial direction of the second shaft element 104 and extends around the perimeter of the second shaft element 104. Within the recess 110 an elastic element 112 is positioned.

Reference is made to figure 5 showing a sectional and partially cut away view of the first shaft element 102 and the second shaft element 104 during the process of joining the first shaft element 102 and the second shaft element 104. The protrusion 106 of the joining portion 120 of the first shaft element is partially moved on the joining portion 118 of the first shaft element, such that the elastic element 112b is compressed and the elastic element 112a is not compressed. Since the protrusion 106 comprises a larger diameter than the joining portion 118 of the first shaft element 104, since the joining portion 120 of the first shaft element 102 has been heated, the joining portion 120 of the first shaft element 102 is slightly spaced apart from the joining portion 104 of the first shaft element 118. The elastic elements 112a, 112b act to center and/or align the first shaft element 102 with respect to the second shaft element 104.

Figure 6 shows a sectional and partially cut away view of the first shaft element 102 and the second shaft element 104 after cooling the protrusion 106 of the joining portion 120 of the first shaft element. As shown in figure 6 the joining portion 106 of the first shaft element and the joining portion 110 of the second shaft element 104 abut each other to form a press fit and compresses the flexible elements 112a and 112b.

The elastic element 112a, 112b may be made of plastics, a peek polymer, polyethylene, rubber like material, non-ferreous metal, low-allow metals or the like.

The inventors of the present invention have recognized that by the pressing and the welding technology described herein high load requirements at low cost may be met. The welded joint of the shaft members is preferably made by capacitor discharge welding as a low-cost, high-quality welded joint and is overlaid with a press fit such that it is capable of absorbing high torsional forces of a static and dynamic nature and capable of absorbing static and dynamic alternating bending stresses as well as bending circumferential stresses via the press fit. This represents a significant cost reduction compared with the laser welding processes commonly used today, which are very cost-intensive and do not exhibit the same behavior under continuous load.

## Claims

1. A method of manufacturing an assembled shaft (100), comprising the following steps:
- at least one of a step of expanding the inner diameter of at least a joining portion (120) of a first shaft element (102) and a step of reducing the outer diameter of at least a joining portion (118) of a second shaft element (104);
- positioning the joining portion (120) of the first shaft element (102) around the joining portion (118) of the second shaft element (104);
- welding the first shaft element (102) and the second shaft (104) element by forcing a current flow through the first shaft element (102) and the second shaft element (104); and
- at least one of a step of reducing the inner diameter of at least the joining portion (120) of the first shaft element (102) and a step of increasing the outer diameter of at least the joining portion (118) of the second shaft element (104);
- further comprising at least one of the following two steps:
- forming a protrusion (116) on the first shaft element (102) that is directed to the second shaft element (104); and
- forming a protrusion (116) on the second shaft element (104) that is directed to the first shaft element (102); and
- further comprising the following step:
- welding the first shaft element (102) and the second shaft element (104) by melting the protrusion (116) by the current flow;
- wherein the joining portion (120) of the first shaft element (102) is arranged around the joining portion (118) of the second shaft element (104) by press fit.

2. Method according to claim 1, further comprising the step of arranging a flexible element (112a, 112b) between the joining portion (120) of the first shaft element (102) and the joining portion (118) of the second shaft element (104).

3. The method according to claim 2, further comprising the steps of
- forming a circumferential recess (110) in the second shaft element (104); and
- positioning the flexible element (112a, 112b) in the circumferential recess (110).

4. The method according to claim 1, further comprising the step of forming the protrusion (106) in the axial direction from the axial end face (124) of the second shaft element (104) toward the axial end face (122) of the first shaft element (102).

5. The method according to any one of claims 1 to 4, wherein the step of forming a protrusion (106) on first shaft element (106) that is directed to the second shaft element (104) and/or forming a protrusion on second shaft element (104) that is directed to the first shaft element (102) comprises the step of forming a cone shaped protrusion.

6. The method according to any one of claims 1 to 5, further comprising the steps of
- forming an essentially cylindrical opening in the end face of the first shaft element extending in the axial direction of the first shaft element, wherein the essentially cylindrical opening in the end face of the first shaft element forms the joining portion of the first shaft element; and
- positioning the joining portion of the second shaft element in the essentially cylindrical opening in the end face of the first shaft element.

7. The method according to any one of claims 1 to 6, wherein
- the step of expanding the inner diameter of at least the joining portion of the first shaft element comprises the step of heating at least the joining portion of the first shaft element; and
- the step of reducing the inner diameter of at least the joining portion of the first shaft element comprises the step of cooling at least the joining portion of the first shaft element.

8. The method according to any one of claims 1 to 7, wherein at least one of the first shaft element and second shaft element is a hollow shaft.

9. The method according to any one of claims 1 to 8, further comprising the step of arranging a rotor of an electric motor on at least one of the first shaft element and the second shaft element.

10. The method according to any one of claims 1 to 8, wherein the step of welding the first shaft element and second the second shaft element by forcing a current flow through the first shaft element and the second shaft element comprises a capacitor discharge welding.

11. An assembled shaft (100), comprising:
- a first shaft element (102) having a joining portion (120) having an inner diameter;
- a second shaft element (104) having a joining portion (118) having an outer diameter, wherein the joining portion (120) of the first shaft element (102) is arranged around the joining portion (120) of the second shaft element (104) by press fit;
- **characterized in that** an axial end face (124) of the joining portion (118) of the second shaft element (104) is welded to the axial end face (122) of the first shaft element (102) by the method according to any one of claims 1 to 10.

12. The assembled shaft (100) according to claim 11, wherein a flexible element (112a, 112b) is arranged between the joining portion (120) of the first shaft element (102) and the joining portion (118) of the second shaft element (104).

13. An electric motor, comprising the assembled shaft manufactured according to the method steps according to claims 1 to 10 or comprising the assembled shaft according to claims 11 or 12, wherein a rotor is arranged on at least one of the first shaft element and second shaft element.

14. A vehicle having the assembled shaft according to claim 11 or 12 or the electric motor according to claim 13.

## Patentansprüche

1. Verfahren zur Herstellung einer montierten Welle (100), umfassend die folgenden Schritte:
- mindestens einer von einem Schritt der Vergrößerung des Innendurchmessers von mindestens einem Verbindungsbereich (120) eines ersten Wellenelements (102) und einem Schritt der Verringerung des Außendurchmessers von mindestens einem Verbindungsbereich (118) eines zweiten Wellenelements (104);
- Positionieren des Verbindungsbereichs (120) des ersten Wellenelements (102) um den Verbindungsbereich (118) des zweiten Wellenelements (104);
- Verschweißen des ersten Wellenelements (102) und des zweiten Wellenelements (104) durch Erzwingen eines Stromflusses durch das erste Wellenelement (102) und das zweite Wellenelement (104); und
- mindestens einen Schritt der Verringerung des Innendurchmessers von mindestens dem Verbindungsbereich (120) des ersten Wellenelements (102) und einen Schritt der Vergrößerung des Außendurchmessers von mindestens dem Verbindungsbereich (118) des zweiten Wellenelements (104);
- ferner umfassend mindestens einen der beiden folgenden Schritte:
- Ausbilden eines Vorsprungs (116) an dem ersten Wellenelement (102), der auf das zweite Wellenelement (104) gerichtet ist; und
- Ausbilden eines Vorsprungs (116) auf dem zweiten Wellenelement (104), der auf das erste Wellenelement (102) gerichtet ist; und
- ferner umfassend den folgenden Schritt:
- Verschweißen des ersten Wellenelements (102) und des zweiten Wellenelements (104) durch Schmelzen des Vorsprungs (116) durch den Stromfluss;
- wobei der Verbindungsbereich (120) des ersten Wellenelements (102) durch Presspassung um den Verbindungsbereich (118) des zweiten Wellenelements (104) angeordnet ist.

2. Verfahren nach Anspruch 1, ferner umfassend den Schritt des Anordnens eines flexiblen Elements (112a, 112b) zwischen dem Verbindungsbereich (120) des ersten Wellenelements (102) und dem Verbindungsbereich (118) des zweiten Wellenelements (104).

3. Verfahren nach Anspruch 2, das ferner die folgenden Schritte umfasst
- Ausbilden einer Umfangsaussparung (110) in dem zweiten Wellenelement (104); und
- Positionieren des flexiblen Elements (112a, 112b) in der Umfangsaussparung (110).

4. Verfahren nach Anspruch 1, ferner umfassend den Schritt des Ausbildens des Vorsprungs (106) in axialer Richtung von der axialen Endfläche (124) des zweiten Wellenelements (104) in Richtung der axialen Endfläche (122) des ersten Wellenelements (102).

5. Verfahren nach einem der Ansprüche 1 bis 4, wobei der Schritt des Ausbildens eines Vorsprungs (106) am ersten Wellenelement (106), der auf das zweite Wellenelement (104) gerichtet ist, und/oder des Ausbildens eines Vorsprungs am zweiten Wellenelement (104), der auf das erste Wellenelement (102) gerichtet ist, den Schritt des Ausbildens eines kegelförmigen Vorsprungs umfasst.

6. Verfahren nach einem der Ansprüche 1 bis 5, ferner umfassend die Schritte
- Ausbilden einer im Wesentlichen zylindrischen Öffnung in der Endfläche des ersten Wellenelements, die sich in der axialen Richtung des ersten Wellenelements erstreckt, wobei die im Wesentlichen zylindrische Öffnung in der Endfläche des ersten Wellenelements den Verbindungsbereich des ersten Wellenelements bildet; und
- Positionieren des Verbindungsbereichs des zweiten Wellenelements in der im Wesentlichen zylindrischen Öffnung in der Endfläche des ersten Wellenelements.

7. Das Verfahren nach einem der Ansprüche 1 bis 6, wobei
- der Schritt des Vergrößerns des Innendurchmessers zumindest des Verbindungsbereichs des ersten Wellenelements den Schritt des Erwärmens zumindest des Verbindungsbereichs des ersten Wellenelements umfasst; und
- der Schritt des Verringerns des Innendurchmessers zumindest des Verbindungsbereichs des ersten Wellenelements den Schritt des Abkühlens zumindest des Verbindungsbereichs des ersten Wellenelements umfasst.

8. Verfahren nach einem der Ansprüche 1 bis 7, wobei mindestens eines von dem ersten Wellenelement und dem zweiten Wellenelement eine Hohlwelle ist.

9. Verfahren nach einem der Ansprüche 1 bis 8, das ferner den Schritt des Anordnens eines Rotors eines Elektromotors auf dem ersten Wellenelement und/oder dem zweiten Wellenelement umfasst.

10. Verfahren nach einem der Ansprüche 1 bis 8, wobei der Schritt des Verschweißens des ersten Wellenelements und des zweiten Wellenelements durch Erzwingen eines Stromflusses durch das erste Wellenelement und das zweite Wellenelement ein Kondensatorentladungsschweißen umfasst.

11. Montierte Welle (100), umfassend:
- ein erstes Wellenelement (102) mit einem Verbindungsbereich (120), der einen Innendurchmesser aufweist;
- ein zweites Wellenelement (104) mit einem Verbindungsbereich (118) mit einem Außendurchmesser, wobei der Verbindungsbereich (120) des ersten Wellenelements (102) durch Presspassung um den Verbindungsbereich (120) des zweiten Wellenelements (104) angeordnet ist;
- **dadurch gekennzeichnet, dass** eine axiale Endfläche (124) des Verbindungsbereichs (118) des zweiten Wellenelements (104) mit der axialen Endfläche (122) des ersten Wellenelements (102) durch das Verfahren nach einem der Ansprüche 1 bis 10 verschweißt wird.

12. Montierte Welle (100) nach Anspruch 11, wobei ein flexibles Element (112a, 112b) zwischen dem Verbindungsbereich (120) des ersten Wellenelements (102) und dem Verbindungsbereich (118) des zweiten Wellenelements (104) angeordnet ist.

13. Elektromotor, der die nach den Verfahrensschritten gemäß den Ansprüchen 1 bis 10 hergestellte montierte Welle oder die montierte Welle gemäß den Ansprüchen 11 oder 12 umfasst, wobei ein Rotor auf mindestens einem der beiden Elemente, dem ersten Wellenelement und dem zweiten Wellenelement, angeordnet ist.

14. Fahrzeug mit der montierten Welle nach Anspruch 11 oder 12 oder dem Elektromotor nach Anspruch 13.

## Revendications

1. Procédé de fabrication d'un arbre assemblé (100), comprenant les étapes suivantes :
- au moins une étape parmi une étape d'extension du diamètre interne d'au moins une section de jonction (120) d'un premier élément d'arbre (102) et une étape de réduction du diamètre externe d'au moins une section de jonction (118) d'un second élément d'arbre (104) ;
- le positionnement de la section de jonction (120) du premier élément d'arbre (102) autour de la section de jonction (118) du second élément d'arbre (104) ;
- le soudage du premier élément d'arbre (102) et du second élément d'arbre (104) en générant une circulation de courant au travers du premier élément d'arbre (102) et du second élément d'arbre (104) ; et
- au moins une étape parmi une étape de réduction du diamètre interne d'au moins la section de jonction (120) du premier élément d'arbre (102) et une étape d'augmentation du diamètre externe d'au moins la section de jonction (118) du second élément d'arbre (104) ;
- comprenant en outre au moins l'une des deux étapes suivantes :
- la formation d'une protubérance (116) sur le premier élément d'arbre (102), laquelle protubérance est dirigée en direction du second élément d'arbre (104) ; et
- la formation d'une protubérance (116) sur le second élément d'arbre (104), laquelle protubérance est dirigée en direction du premier élément d'arbre (102) ; et
- comprenant en outre l'étape suivante :
- le soudage du premier élément d'arbre (102) et du second élément d'arbre (104) en fondant la protubérance (116) au moyen de la circulation de courant ;
- dans lequel la section de jonction (120) du premier élément d'arbre (102) est agencée autour de la section de jonction (118) du second élément d'arbre (104) au moyen d'un ajustement par pression.

2. Procédé selon la revendication 1, comprenant en outre l'étape d'agencement d'un élément souple (112a, 112b) entre la section de jonction (120) du premier élément d'arbre (102) et la section de jonction (118) du second élément d'arbre (104).

3. Procédé selon la revendication 2, comprenant en outre les étapes constituées par :
- la formation d'un évidement circonférentiel (110) dans le second élément d'arbre (104) ; et
- le positionnement de l'élément souple (112a, 112b) dans l'évidement circonférentiel (110).

4. Procédé selon la revendication 1, comprenant en outre l'étape de formation de la protubérance (106) dans la direction axiale depuis la face d'extrémité axiale (124) du second élément d'arbre (104) en direction de la face d'extrémité axiale (122) du premier élément d'arbre (102).

5. Procédé selon l'une quelconque des revendications 1 à 4, dans lequel l'étape de formation d'une protubérance (106) sur le premier élément d'arbre (102), laquelle protubérance est dirigée en direction du second élément d'arbre (104), et/ou l'étape de formation d'une protubérance sur le second élément d'arbre (104), laquelle protubérance est dirigée en direction du premier élément d'arbre (102), comprend l'étape de formation d'une protubérance en forme de cône.

6. Procédé selon l'une quelconque des revendications 1 à 5, comprenant en outre les étapes constituées par :
- la formation d'une ouverture essentiellement cylindrique dans la face d'extrémité du premier élément d'arbre, laquelle ouverture est étendue dans la direction axiale du premier élément d'arbre, dans lequel l'ouverture essentiellement cylindrique ménagée dans la face d'extrémité du premier élément d'arbre forme la section de jonction du premier élément d'arbre ; et
- le positionnement de la section de jonction du second élément d'arbre dans l'ouverture essentiellement cylindrique ménagée dans la face d'extrémité du premier élément d'arbre.

7. Procédé selon l'une quelconque des revendications 1 à 6, dans lequel :
- l'étape d'extension du diamètre interne d'au moins la section de jonction du premier élément d'arbre comprend l'étape de chauffage d'au moins la section de jonction du premier élément d'arbre ; et
- l'étape de réduction du diamètre interne d'au moins la section de jonction du premier élément d'arbre comprend l'étape de refroidissement d'au moins la section de jonction du premier élément d'arbre.

8. Procédé selon l'une quelconque des revendications 1 à 7, dans lequel au moins un élément d'arbre parmi le premier élément d'arbre et le second élément d'arbre est un arbre creux.

9. Procédé selon l'une quelconque des revendications 1 à 8, comprenant en outre l'étape d'agencement d'un rotor d'un moteur électrique sur au moins un élément d'arbre parmi le premier élément d'arbre et le second élément d'arbre.

10. Procédé selon l'une quelconque des revendications 1 à 8, dans lequel l'étape de soudage du premier élément d'arbre et du second élément d'arbre en générant une circulation de courant au travers du premier élément d'arbre et du second élément d'arbre comprend un soudage par décharge de condensateur.

11. Arbre assemblé (100), comprenant :
- un premier élément d'arbre (102) comportant une section de jonction (120) qui présente un diamètre interne ; et
- un second élément d'arbre (104) comportant une section de jonction (118) qui présente un diamètre externe, dans lequel la section de jonction (120) du premier élément d'arbre (102) est agencée autour de la section de jonction (120) du second élément d'arbre (104) au moyen d'un ajustement par pression ;
**caractérisé en ce qu'**une face d'extrémité axiale (124) de la section de jonction (118) du second élément d'arbre (104) est soudée sur la face d'extrémité axiale (122) du premier élément d'arbre (102) au moyen du procédé selon l'une quelconque des revendications 1 à 10.

12. Arbre assemblé (100) selon la revendication 11, dans lequel un élément souple (112a, 112b) est agencé entre la section de jonction (120) du premier élément d'arbre (102) et la section de jonction (118) du second élément d'arbre (104).

13. Moteur électrique, comprenant l'arbre assemblé fabriqué conformément aux étapes de procédé selon les revendications 1 à 10 ou comprenant l'arbre assemblé selon la revendication 11 ou 12, dans lequel un rotor est agencé sur au moins un élément d'arbre parmi le premier élément d'arbre et le second élément d'arbre.

14. Véhicule comportant l'arbre assemblé selon la revendication 11 ou 12 ou le moteur électrique selon la revendication 13.
